# EUROPÄISCHE PATENTSCHRIFT

(11) **EP 1 859 164 B1**
(45) Veröffentlichungstag und Bekanntmachung des Hinweises auf die Patenterteilung: **28.09.2016**
(21) Anmeldenummer: 06722631.6
(22) Anmeldetag: 15.03.2006
(51) Int. Cl.: F03D 3/04

(54) **VERFAHREN UND VORRICHTUNG ZUR NUTZUNG DER WINDENERGIE**
METHOD AND DEVICE FOR USING WIND ENERGY
PROCEDE ET DISPOSITIF D'UTILISATION DE L'ENERGIE EOLIENNE

(30) Priorität: 15.03.2005 DE 102005012180; 20.12.2005 DE 102005060818
(43) Veröffentlichungstag der Anmeldung: 28.11.2007
(73) Patentinhaber: itea ecotech GmbH, 60313 Frankfurt/Main (DE)
(72) Erfinder: Kelaiditis, Konstantin, 66386 St. Ingbert (DE)
(74) Vertreter: Bernhardt, Reinhold
(86) Internationale Anmeldenummer: PCT/DE2006/000475
(87) Internationale Veröffentlichungsnummer: WO 2006/097091

(56) Entgegenhaltungen:
- WO-A-03/052267
- WO-A-2004/109097
- DE-A1- 19 957 141
- GB-A- 2 304 381
- GB-A- 191 012 096
- US-A1- 2004 265 130

## Beschreibung

Die Erfindung betrifft eine Vorrichtung zur Nutzung von Windenergie, die zur Lenkung des Windes Strömungen wirksam auf einen die Strömungsenergie umsetzenden Rotor mindestens eine den Wind derart lenkende Leitfläche aufweist, dass der Rotor, dessen Drehachse quer zur Strömungsrichtung angeordnet ist, mit der Strömung beaufschlagt ist.

Eine solche Vorrichtung geht aus der WO 2004/109097 A1 hervor. Die Strömung wird in zwei unabhängige Strömungen getrennt und jede der getrennten Strömungen auf jeweils einen um eine vertikale Achse rotierenden Rotor geleitet, der zur Aufnahme der Strömung mit Schaufeln versehen ist. Die beiden Rotoren drehen sich dabei in entgegengesetzten Richtungen.

Aus der DE 199 57 141 A1 ist eine Vorrichtung bekannt, bei der die Strömung auf zwei nebeneinander angeordnete, dreiflüglige Vertikalrotoren geleitet wird.

Weitere Vorrichtungen zur Nutzung von Windenergie, bei denen die Strömung zum Umsetzen der Strömungsenergie durch Leitflächen auf einen Rotor geleitet wird, gehen aus der GB 2 304 381 A, der WO 03/052267 A1, der GB 12096 A und der US 2004/0265130 A1 hervor.

Der Erfindung liegt die Aufgabe zugrunde, eine Vorrichtung der eingangs genannten Art zu schaffen, die einfacher aufgebaut ist.

Gemäß der Erfindung wird diese Aufgabe dadurch gelöst, dass der Rotor entlang seiner Drehachse hohl ist und auf einer kreisförmigen Schiene gelagert ist.

Zur Ausgestaltung der Erfindung bestehen verschiedenste, auch kombinierbare, Möglichkeiten, wobei die wirksame Strömung unmittelbar der gelenkte Wind sein oder durch diesen zustande kommen kann:

Durch die Lenkung kann
a) der Wind von einer Stelle höherer Windgeschwindigkeit an eine für die Aufstellung des Rotors bevorzugtere Stelle niedrigerer Windgeschwindigkeit geleitet werden,
b) der Strömungsquerschnitt verdichtend und die Strömungsgeschwindigkeit erhöhend verengt werden,
c) eine Seite des Rotors mit quer zur Windrichtung angeordneter Achse abgeschirmt werden und/oder
d) in Strömungsrichtung hinter dem Rotor eine Sogwirkung erzeugt werden.

Eine Vorrichtung zum Durchführen des Verfahrens ist gekennzeichnet durch mindestens eine den Wind derart lenkende Leitfläche, dass ein Rotor zum Umsetzen der Strömungsenergie mit Strömung beaufschlagt ist.

Dem Obigen entsprechend vielfältig können die zur Durchführung der Verfahrensweise eingesetzten Mittel sein. Insbesondere kommt dabei Leichtbauweise mit an Gerüsten gehaltenen Folien, Windhosen oder auch aufgespannten Segeln zur Verwirklichung der Leitflächen in Betracht.

Als eine konkrete Ausführung wird eine Alternative zu Windrädern vorgeschlagen, gekennzeichnet durch einen hohlen Turm mit einer Windfangöffnung am oberen Ende und einem im Hohlquerschnitt des Turmes gebildeten Strömungskanal, der nach unten zu mindestens einem nahe der Erdoberfläche angeordneten Rotor zum Umsetzen der Strömungsenergie führt, hinter dem ein Auslass für die Luft angeordnet ist.

Durch die Anordnung des Rotors und der von diesem getriebenen weiteren Einrichtungen an oder jedenfalls nahe der Erdoberfläche können alle diese Einrichtungen einfacher und kostengünstiger sein und auch einfacher und kostengünstiger gewartet werden als die üblichen Windräder, deren Lager, Getriebe und Generatoren sich in großer Höhe befinden.
Der Turm kann ebenfalls aus einer kostengünstigeren, da leichteren Konstruktion bestehen als bei den Windrädern, da er auch in seiner größten Höhe mit Abspannseilen abgefangen werden kann. Die Windräder lassen demgegenüber auf der Länge ihrer Rotorblätter, d.h. mindestens etwa im obersten Drittel des Turmes, ein Abfangen nicht zu; es unterbleibt dann ganz. Dabei kann außerdem die Windfangöffnung des Turmes eine größere Fläche aufweisen als die, wegen des entstehenden Kippmoments begrenzte, Gesamtfläche der Windradblätter beträgt. Die Möglichkeit des Abspannens ist besonders vorteilhaft für den Einsatz offshore. Für diesen Einsatz, schwimmend auf Pontons, sind die Türme wegen ihres im Vergleich zu Windrädern niedrig gelegenen Schwerpunkts ohnehin besonders geeignet.

Die Ausnutzung des eingefangenen Windes ist vollständiger als bei Windrädern. Die Strömung vergleichmäßigt sich auf der Länge des Turmes und beaufschlagt den Rotor gleichmäßig, wogegen die Blätter der Windräder häufig durchaus unterschiedlich beaufschlagt werden.

Die Strömung kann auf Rotoren kleineren Querschnitts einschließlich Turbinen fokussiert werden.

Rotoren mit in der Strömungsrichtung liegender Achse können mit einer größeren Zahl von Rotorblättern versehen werden.

Es können aber auch Rotoren mit quer zur Strömungsrichtung liegender Achse eingesetzt werden, die höchstens zur Hälfte in den Strömungsquerschnitt ragen und deren Blätter unmittelbar von der Strömung mitgenommen werden.
Dabei kann der Querschnitt des Strömungskanals auch verändert, ggf. von runder in rechteckige Form überführt werden.
Er kann, in Grenzen, auch zur Erhöhung der Strömungsgeschwindigkeit und der Luftdichte verkleinert werden, wie bei dem Hinweis auf die Fokussierung bereits angedeutet.
Der Blitzschutz wird im Vergleich zu Windrädern vereinfacht.
Die Umweltbelastung wird gegenüber Windrädern verringert; es werden in geringerem Maße Geräusche und es wird kein wechselnder Schattenwurf erzeugt. Mehrere Vorrichtungen können in größerer Dichte aufgestellt werden, d. h. die Energieausbeute, bezogen auf die von der Vorrichtung beanspruchte Grundfläche, wird größer.

In aller Regel wird ein oberer Endabschnitt des Turmes mit der Windfangöffnung drehbar sein, damit die Stellung der Windfangöffnung wechselnden Windrichtungen angepasst werden kann. Verschließbare Öffnungen nach verschiedenen Seiten stehen als Alternative in Betracht.
In weiterer vorteilhafter Ausgestaltung ist der Turm teleskopisch längenverstellbar. Er kann dann bei hohen Windstärken mehr oder weniger weit eingefahren wer den, um die auf ihn ausgeübte Windkraft zu verringern und Beschädigungen vor zubeugen.
Die normale Höhe der Windfangöffnung kann etwa in einer Größenordnung liegen wie die Höhen der Windradachsen.

Nach einer vorteilhaften Weiterbildung der Erfindung verzweigt sich der Strömungskanal, und die genannten Einrichtungen zur Umsetzung sind in jedem Zweig angeordnet, wobei vorzugsweise mindestens ein Teil der Zweige verschließbar ist.

Mit der Aufteilung des Strömungskanals in verschließbare Zweige kann die Vorrichtung unterschiedlichen Windgeschwindigkeiten in der Weise angepasst werden, dass bei kleineren Windgeschwindigkeiten nur ein Teil der Einrichtungen zur Umsetzung betrieben wird, diese aber ohne große Veränderung ihrer Beaufschlagung. Die Einrichtungen können so immer nahe ihrer-optimalen Betriebsweise arbeiten. Aber auch aus anderen Gründen kann man, auch mit unverschließbaren Zweigen, die Aufteilung vorziehen.

Die anstelle von Windrädern vorgesehenen Türme erfassen die in größerer Höhe herrschenden größeren Windgeschwindigkeiten. Das erfindungsgemäße Prinzip lässt sich aber auch in vielfältiger anderer Weise verwirklichen. An Orten stärkeren Windanfalls, z.B. im Gebirge oder an Brücken, können beispielsweise Windhosen mit einer am Boden angebrachten Öffnung installiert werden. Die Öffnung kann solchermaßen aufgestellt sein, dass sie sich bei stärkerem Wind nach hinten neigt und nötigenfalls ganz wegkippt.

Es können auch einfache Stauraum ausgebildet sein, aus denen ein Strömungskanal herausführt.

Es können statt Windhosen oder anderen Strömungskanälen geschlossenen Quer schnitts segelartige Leitwände, auch über größere Strecken, gespannt werden und am Ende einen Rotor beaufschlagen.

Dieser Rotor könnte ein Windrad herkömmlicher Bauart, wenn auch kleiner, sein und außerdem unmittelbar im Wind stehen. So käme an dem Windrad eine Verdichtung zustande durch Ineinanderführung von zwei Strömungen, d.h. insgesamt betrachtet letztlich durch eine Verengung des Strömungsquerschnitts.

Die vorstehend im Zusammenhang mit dem Turm erwähnten Maßnahmen der Strömungsführung und Rotorgestaltung können auch weitgehend bei den weiteren oben erwähnten Ausführungsformen angewandt werden.

Als eine besonders vorteilhafte Weiterbildung der Erfindung wird jedoch eine Vorrichtung mit einem Rotor mit quer zur Windrichtung angeordneter Achse vorgeschlagen, bei der der Rotor ringsum von Fang- und Leitschaufeln umgeben ist, die jeweils schräg zur Radialrichtung, bezogen auf den Rotor, angestellt sind, derart, dass sie den auf sie treffenden Wind jeweils einseitig auf den Rotor leiten und die andere Rotorseite abschirmen.
Diese Vorrichtung kann, bei Anordnung des Rotors mit senkrechter Achse, Wind aus jeder Richtung aufnehmen ohne verändert zu werden. Die Vorrichtung kann daher auch in großen Abmessungen und in mehrfacher Anordnung, eine Vorrichtung über der anderen, ausgeführt werden. Es sind vielstöckige Turmbauten mit höchster Leistung möglich.

Nach einer weiteren Ausgestaltung der Erfindung sind die Rotorschaufeln mit Durchlässen versehen, die sich bei größeren Windgeschwindigkeiten weiter öffnen.
Entsprechendes gilt für veränderbare Stellungen von Fang- und Leitschaufeln.

Außer der Umsetzung der Windenergie in elektrische Energie kommt bei einigen Varianten der erfindungsgemäßen Vorrichtungen auch eine Umsetzung in mechanische Energie, z. B. zum unmittelbaren Antrieb von Wasserpumpen, in Betracht.

Die Zeichnungen geben ein Ausführungsbeispiel der Erfindung wieder.
- Fig. 1: zeigt schematisch eine Vorrichtung zur Nutzung der Windenergie in Ansicht,
- Fig. 2: zeigt eine Einzelheit in Ansicht,
- Fig. 3: zeigt eine Einzelheit einer anderen Ausführung einer Vorrichtung zur Nutzung der Windenergie in isometrischer Darstellung,
- Fig. 4: zeigt die Einzelheit nach Fig. 3 in axialer Ansicht,
- Fig. 5 bis 14: zeigen schematisch jeweils eine weitere Vorrichtung zur Nutzung der Windenergie,
- Fig. 15: zeigt die Vorrichtung nach Fig. 14 in Mehrfach-Anordnung in isometrischer Darstellung,
- Fig. 16: zeigt einen untersten Abschnitt der Vorrichtung nach Fig. 15 in senkrechtem Schnitt,
- Fig. 17: zeigt eine Einzelheit aus Fig. 16 in größerem Maßstab,
- Fig. 18: zeigt eine weitere Einzelheit der Vorrichtung nach Fig. 15 in Draufsicht,
- Fig. 19 und 20: zeigen Abwandlungen von Rotorflügeln in isometrischer Darstellung und
- Fig. 21: verdeutlicht das oben unter d) genannte Wirkprinzip.

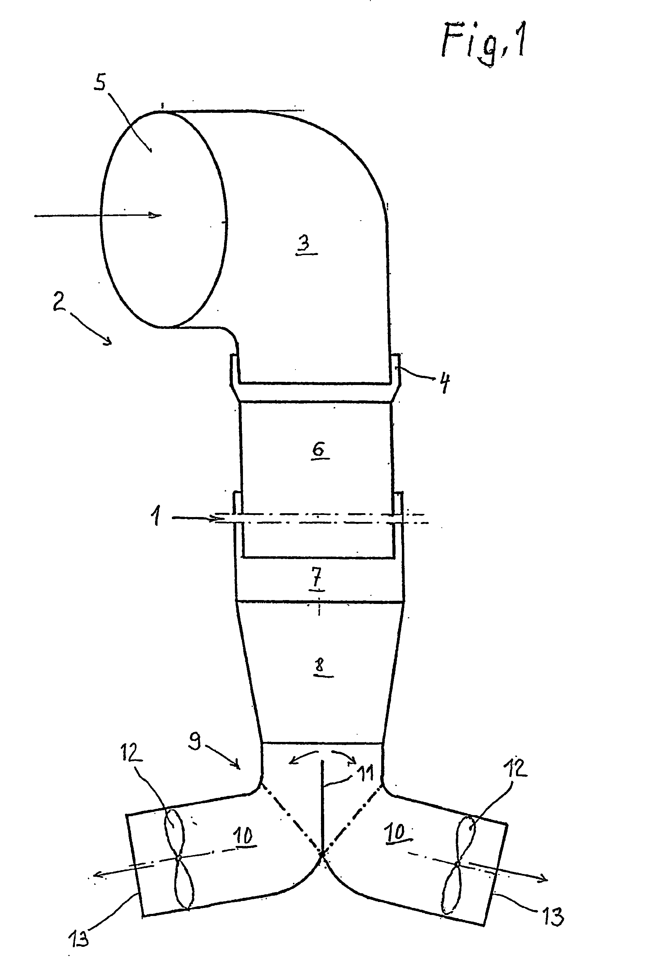

In Fig. 1 ist, durch einen bei 1 herausgeschnittenen Längenabschnitt stark verkürzt und ohne seine statische Abstützung im Fußbereich dargestellt, ein Turm 2 wiedergegeben.

Ein oberster Abschnitt 3 des Turmes ist in einem Drehlager 4 um die senkrechte Turmachse drehbar und nach der Seite umgebogen, so dass sein als ein Windfangöffnung 5 gestaltetes Ende in einer senkrechten Ebene liegt.

Der unter dem Drehlager 4 sich anschließende Turmabschnitt 6 ist teleskopisch verschiebbar in einem feststehenden Turmabschnitt 7 angeordnet.
Darunter folgt ein verjüngter Turmabschnitt 8, an dessen unterem Ende eine Verzweigung 9 in zwei Kanäle 10 ausgebildet ist.
Die beiden Kanäle 10 sind wahlweise durch eine mittig angeordnete Klappe 11 verschließbar, wie strichpunktiert angedeutet. In ihrer, dargestellten, mittleren Stellung lässt die Klappe 11 die Eingänge in beide Kanäle 10 frei.

In den Kanälen 10 ist jeweils ein Rotor 12 angedeutet. Die Rotoren 12 treiben jeweils einen außerhalb des Kanals, ggf. auch unter Bodenniveau, angeordneten, Generator.

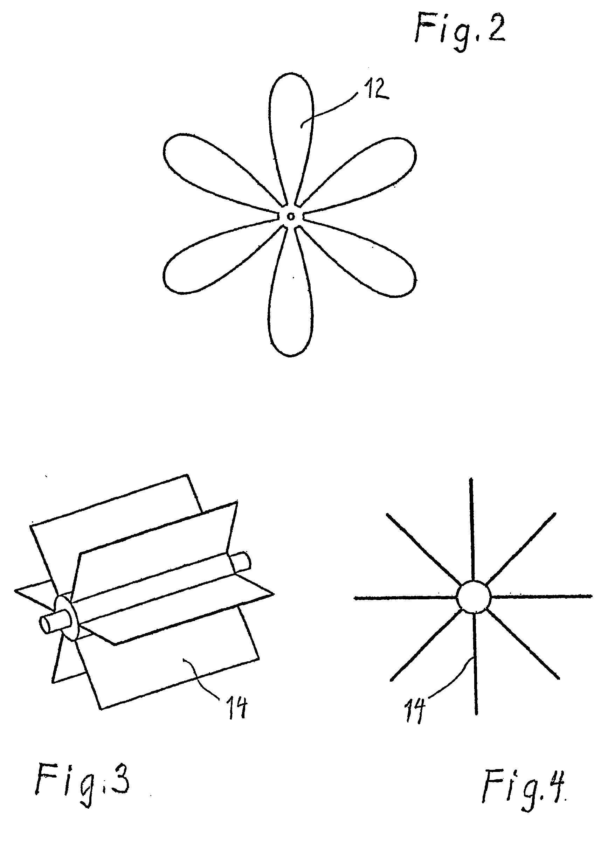

Fig. 3 und 4 zeigen eine andere Art Rotor 14. Der Rotor 14 ist statt des Rotors 12 von einer Ausbuchtung des Kanals 10 her in den Kanal 10 hineinragend zu denken. An den Enden der Kanäle 10 führen Auslässe 13 ins Freie.

Die Funktion der Vorrichtung ist oben bereits erläutert.

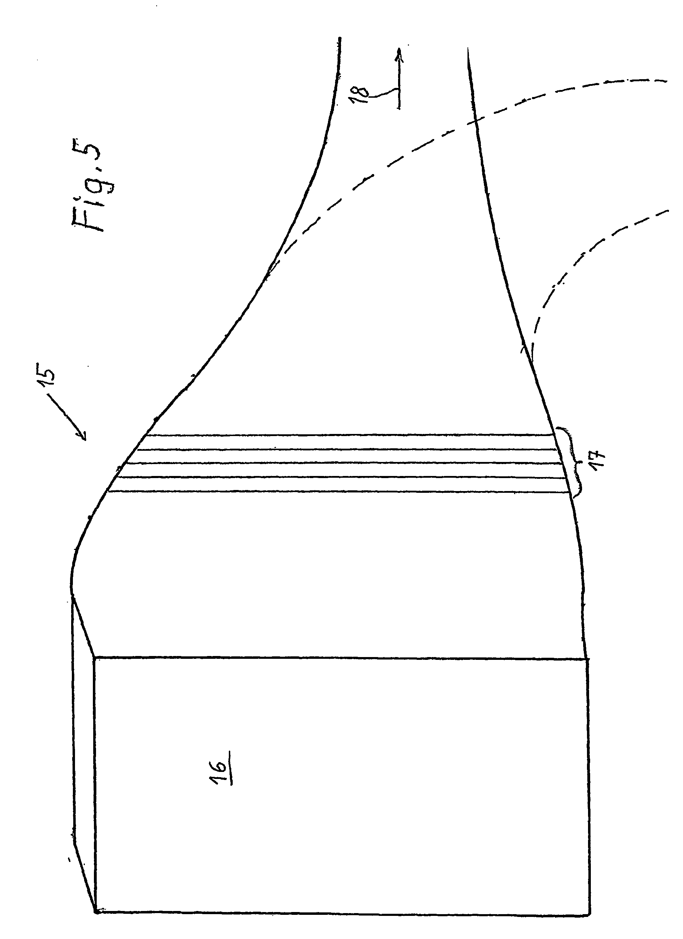

In Fig. 5 ist eine am Boden installierte Windhose 15 dargestellt.

Sie hat, beispielsweise durch Aufspannen mittels eines nicht gezeichneten, am Boden befestigten Rahmens, eine rechteckige Eintrittsöffnung 16 und geht dann in einen kleineren Querschnitt über. Ein balgartiger Zwischenabschnitt 17 erlaubt es, die Eintrittsöffnung 16, wenn der Wind sich dreht, zu versetzen und wieder dem Wind entgegenzurichten. Die Windhose führt (Pfeil 18) in Anpassung an den Aufstellungsplatz z.B. eines Rotor/Generator-Aggregats zu einem Rotor. Eine alternative Führung ist gestrichelt dargestellt.
Statt rechteckig könnte die den Wind einfangende Eintrittsöffnung 16 auch oval oder kreisrund oder noch anders geformt sein. Es kann die Möglichkeit vorgesehen werden, bei stärkerem Wind die Eintrittsöffnung 16 sich nach hinten neigen oder ganz umklappen zu lassen.
Nicht gezeichnete zusätzliche Leitwände könnten den Wind, vor allem bei kleineren Windgeschwindigkeiten, nach der Eintrittsöffnung 16 lenken.

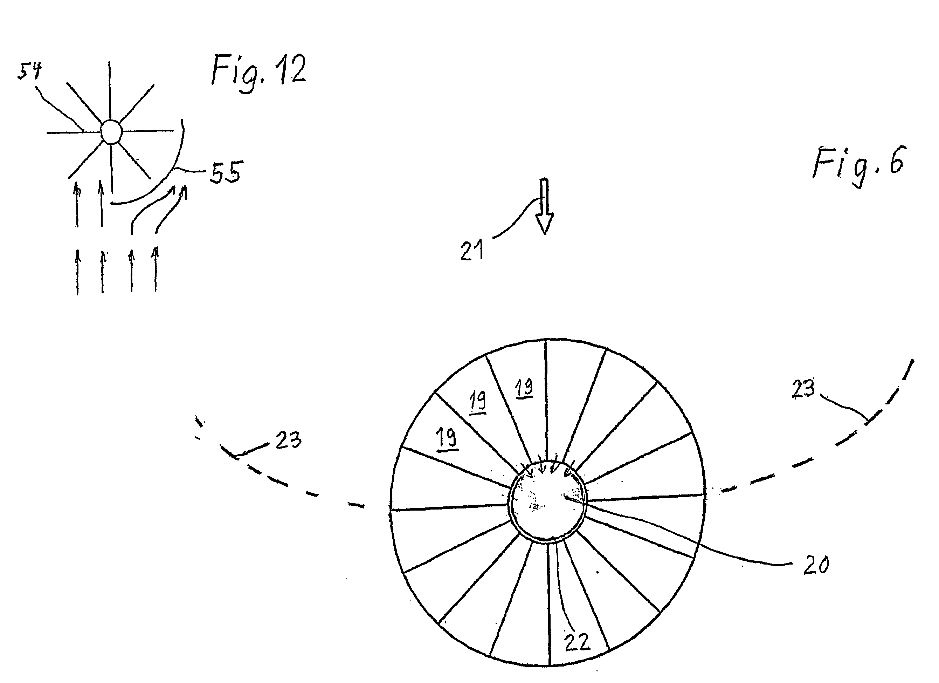

In Fig. 6 ist eine Anlage mit fächerförmigen, nach allen Seiten gerichteten Stauräumen 19 dargestellt, die in einen senkrechten Strömungskanal 20 münden. Ein Pfeil 21 gibt die Windrichtung an. In den vier den Wind zugekehrten Stauräumen 19 wird der Wind gefangen. Er tritt in den Strömungskanal 20 über, der zu einem Rotor/Umsetzer führt.
Damit die Luft nicht durch die anderen Stauröume 19 austreten kann, sind deren Mündungen durch eine Abschirmung 22 verschlossen.
Bei schwachem Wind könnten zwei gestrichelt gezeichnete Fangflügel 23 montiert werden. Die Abschirmung 22 würde dann so weit verkürzt werden, dass auch alle nur mittels der Fangflügel 23 beaufschlagten Stauräume 19 nach dem Strömungskanal 20 hin geöffnet sind.

Die Anlage ist zur Aufstellung an Orten gedacht, wo der Wind aus allen Richtungen kommen kann.

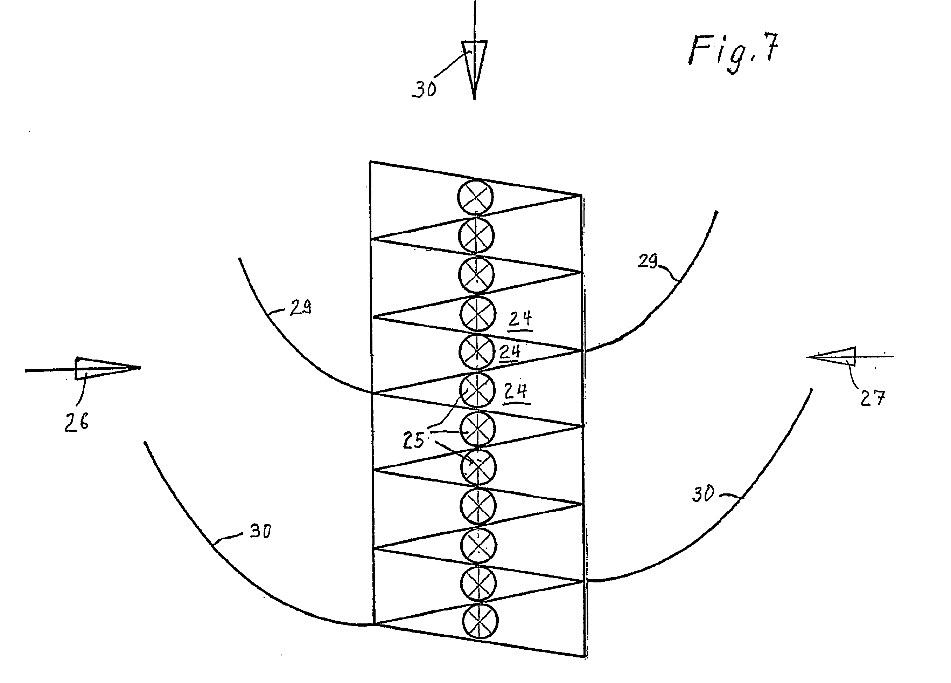

Auch die Anlage nach Fig. 7 ist für Wind aus verschiedenen Richtungen vorgesehen. Sie weist nach zwei Seiten hin gerichtete, im Querschnitt dreieckige Stauräume 24 auf, aus denen jeweils ein Strömungskanal 25 herausführt.
Wind aus den Richtungen gemäß Pfeilen 26 und 27 wird von den Stauräumen 24 unmittelbar gefangen.
Für Wind aus der Richtung gemäß Pfeil 28 sind zusätzlich Fangflügel 29 und hinter diesen größere Fangflügel 30 vorgesehen.
Die Anlage eignet sich zur Anbringung an Brücken oder über Tälern. Die Stauräume 24 und die Fangflügel 29 und 30 können aus Segeltuch oder Ähnlichem hergestellt sein. So können die Fangflügel auch eingerollt werden.

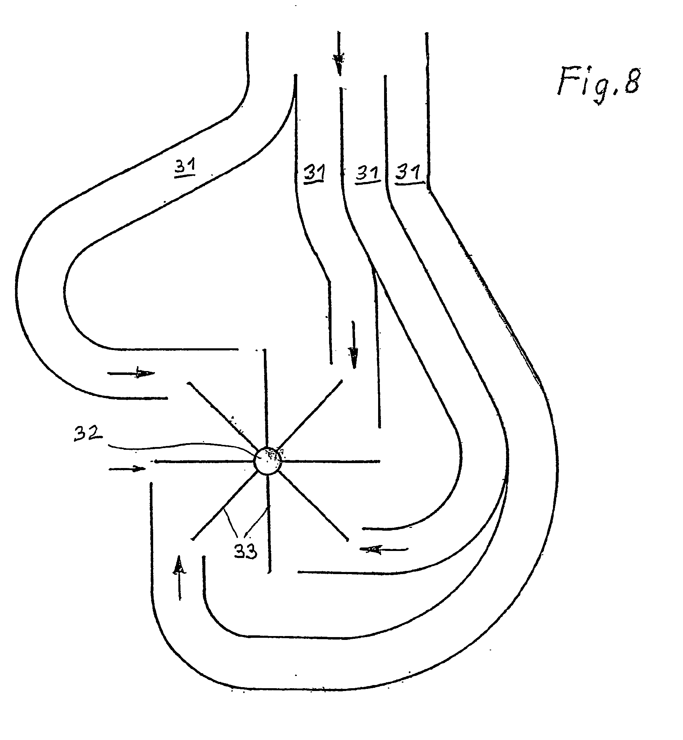

Nach Fig. 8 münden mehrere Strömungskanäle 31 symmetrisch winkelversetzt auf einen Rotor 32 aus.
Hier könnte es sich um Strömungskanäle 25 aus Fig. 7 handeln, aber auch um einen ursprünglich einheitlichen, aufgeteilten Strömungskanal. Die Rotorflügel 33 sind eben dargestellt. Vorzugsweise sind sie jedoch leicht der Strömung entgegen gebogen und/oder in noch anderer Weise optimiert.

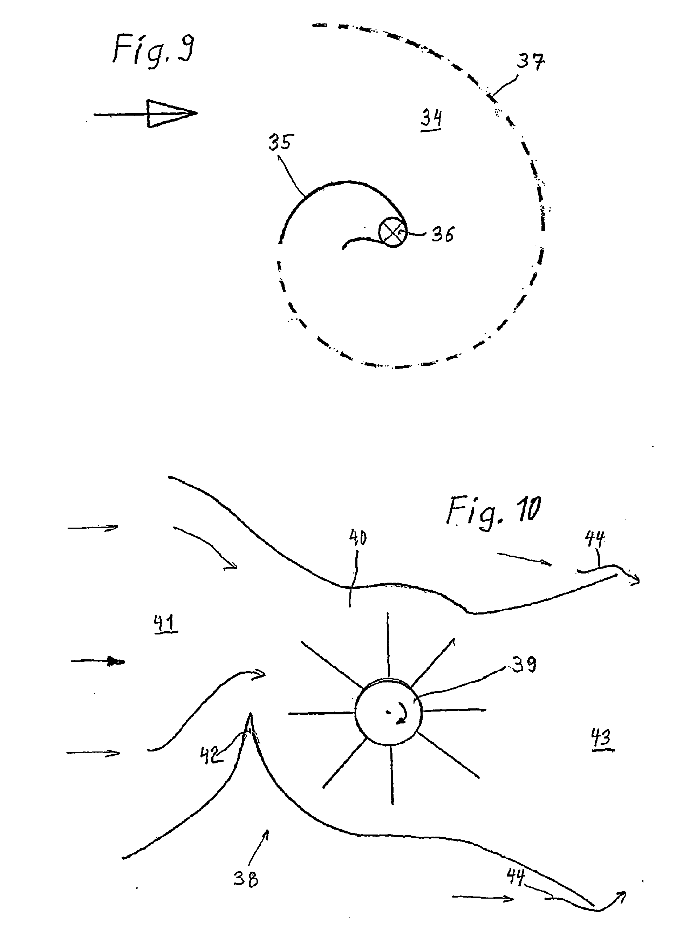

Fig. 9 zeigt einen Stauraum 34 von der Spiralform eines Schneckenganges.
Er setzt sich zusammen aus einem festen Kernteil 35, aus dem ein senkrechter Strömungskanal 36 herausführt, und einer gestrichelt gezeichneten, verformbaren Wand 37, deren Biegung aufgeweitet und verengt werden kann derart, dass die Öffnung aus verschiedenen Richtungen kommendem Wind zugekehrt werden kann.

Fig. 10 zeigt eine Vorrichtung 38, die einschließlich eines integrierten Rotors 39 vollständig im Wind aufgestellt und nach dem Wind gedreht wird.
Der Rotor 39 ist in einer kurzen Luftführung 40 angeordnet, die dem Wind entgegen als ein Fangtrichter 41 ausgebildet ist und eine die eine Hälfte des Rotors 39 gegenüber der Strömung abschirmende Einschnürung 42 aufweist. An ihrem Ausgang 43 erweitert sich die Luftführung 40, so dass der außen an der Luftführung 40 vorbeistreichende Wind hier, wie mit den Pfeilen 44 angedeutet, eine verstärkte Sogwirkung ausübt.

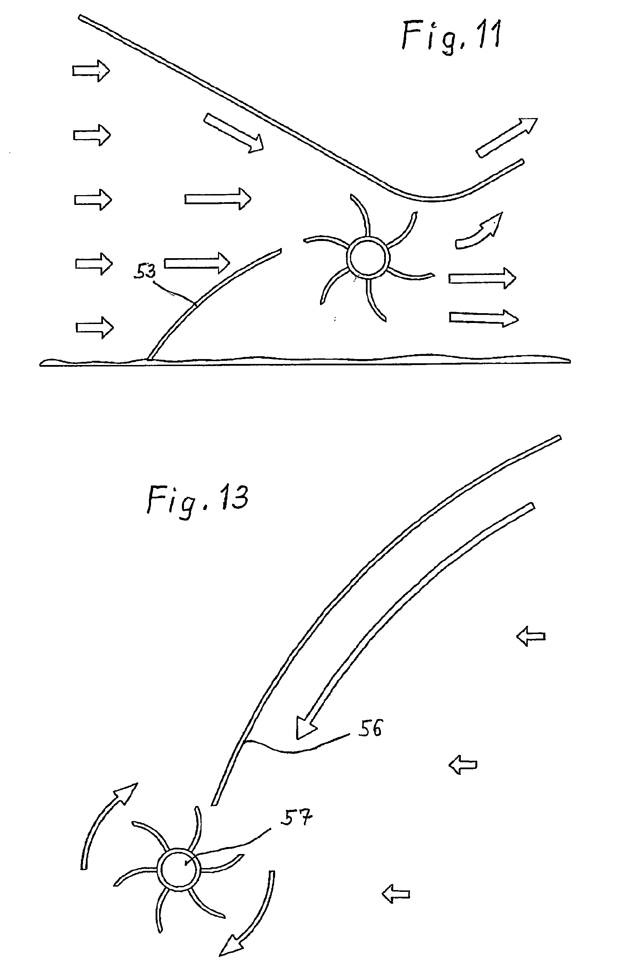

Eine etwa wirkungsgleiche Vorrichtung ist in Fig. 11 dargestellt. Sie ist nicht als selbstständige Vorrichtung, sondern beispielsweise am Ende der Windhose 15 nach Fig. 5 gedacht. Sie steht auf dem Boden, die Achse des Rotors liegt waagerecht. Ein Einbau 53 schirmt die eine Hälfte des Rotors ab und lenkt zugleich den Wind auf die andere Hälfte.

In Fig. 12 ist ein Rotor 54 unmittelbar in den Wind gestellt und mit einer bloßen einseitigen Abschirmung 55 versehen. Genauerer Erläuterungen dazu bedarf es nicht. Klargestellt sei jedoch, dass hier nicht der gelenkte Wind die wirksame Strömung bildet, sondern, durch Wegfall des Gegendrehmoments, der ungelenkte Teil des Windes wirksam gemacht wird.

In Fig. 13 ist eine größere Fang- und Leitfläche 56 für den Wind solchermaßen an einen Rotor 57 herangeführt, dass sie dessen eine Hälfte mit Luftströmung beaufschlagt und die andere Hälfte abschirmt; sie endet etwa vor der Mitte nahe dem Umfang des Rotors. Die Fang- und Leitfläche 56 könnte z.B. durch eine Mauer oder durch ein Segel verwirklicht sein. Die Anordnung wäre denkbar an Stellen, wo im wesentlichen nur eine Windrichtung auftritt, z.B. in speziellen Tallagen. Ein Segel könnte auch aus der Höhe herabführen zu einem Rotor mit waagerechter Achse.

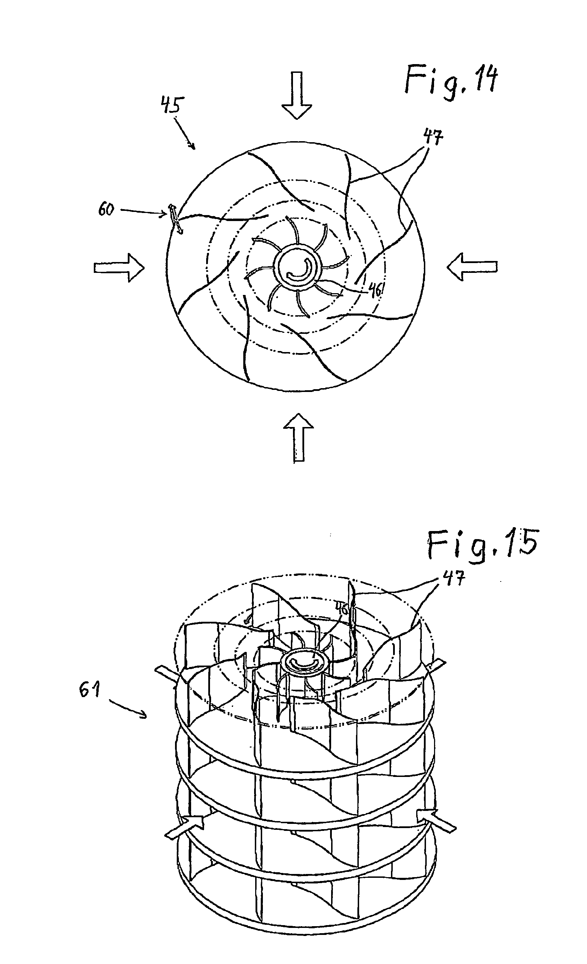

Die, mit 45 bezeichnete, Anlage nach Fig. 14 wird ebenso wie die Vorrichtung 38 nach Fig. 10 als Ganzes im Wind aufgestellt. Sie kann Wind aus jeder Richtung aufnehmen.

Ein Rotor 46 ist von Fang- und Leitschaufeln 47 umgeben. Die Fang- und Leitschaufeln 47 sind gegen die Radialrichtung angestellt, derart, dass sie den Wind jeweils nur auf der einen Seite der Rotorachse auf die Rotorschaufeln lenken. Sie sind leicht S-förmig gebogen, so dass sie außen mehr Luft einfangen und innen die Luft noch etwas mehr zur Seite lenken.

Die Schaufeln des Rotors 46 sind etwas dem Wind entgegen gebogen.

In Strömungsrichtung hinter dem Rotor 46 tritt die Luft zwischen den dortigen Fangund Leitschaufeln 47 aus.

Besonders geeignet ist die Vorrichtung nach Fig. 14 zur Aufstellung in Wohngebieten, z.B. auf Dächern.

Gleichermaßen geeignet ist sie aber auch, in der Höhe segmentiert zu werden, anders betrachtet mehrfach angeordnet zu werden, eine über der anderen. Auch die Anlage gemäß Fig. 10 könnte mehrstöckig sein.
Die Segmente bzw. Stockwerke hätten beispielsweise eine Höhe von je 20 m. So ist ein modularer Aufbau mit den entsprechenden Vorteilen bei Herstellung, Transport, Aufbau und Wartung möglich. Dabei können auch kleinere Generatoreinheiten benutzt werden.

Die Rotoren 39 und 46 können in der Mitte einen Hohlraum aufweisen, der auch für andere Zwecke genutzt werden kann, wie als Lagerraum oder Maschinenraum. Es könnten auch die Generatoren darin angeordnet werden.
Bei den Anordnungen nach Fig. 9 und 10 können die Generatoren an weiter außenliegenden Drehbereichen angeordnet werden und damit ohne Getriebe arbeiten.
Auch die Anbringung mehrerer Generatoren je Moduleinheit ist möglich, die jeweils nach der Windgeschwindigkeit zugeschaltet werden.
Die Rotoren 39 und 46 könnten mit Schwungmassen versehen werden, um die Wir kung kurzzeitiger Schwankungen der Windgeschwindigkeit auf die Spannungsstabilität zu verringern.
Die Fang- und Leitschaufeln 47 können schwenkbar angeordnet sein, wie in Fig. 14 bei 60 als Beispiel angedeutet, um die Ausbeute der Windenergie bei niedriger Windgeschwindigkeit zu vergrößern bzw. die Windzufuhr zum Rotor nötigenfalls zu verkleinern, wie bei Stürmen, und ggf. eine Schließstellung einzunehmen, etwa für Reparaturen.
Die Fang- und Leitschaufeln 47 könnten auch teleskopisch vergrößerbar sein.

Fig. 15 zeigt die erwähnte mehrstöckige Anordnung der Anlage 45 nach Fig. 14. Die Darstellung ist über der vierten Anlage unterbrochen; zu denken ist an einen Turmbau im Ganzen etwa von den Maßen eines Kraftwerk-Kühlturmes.

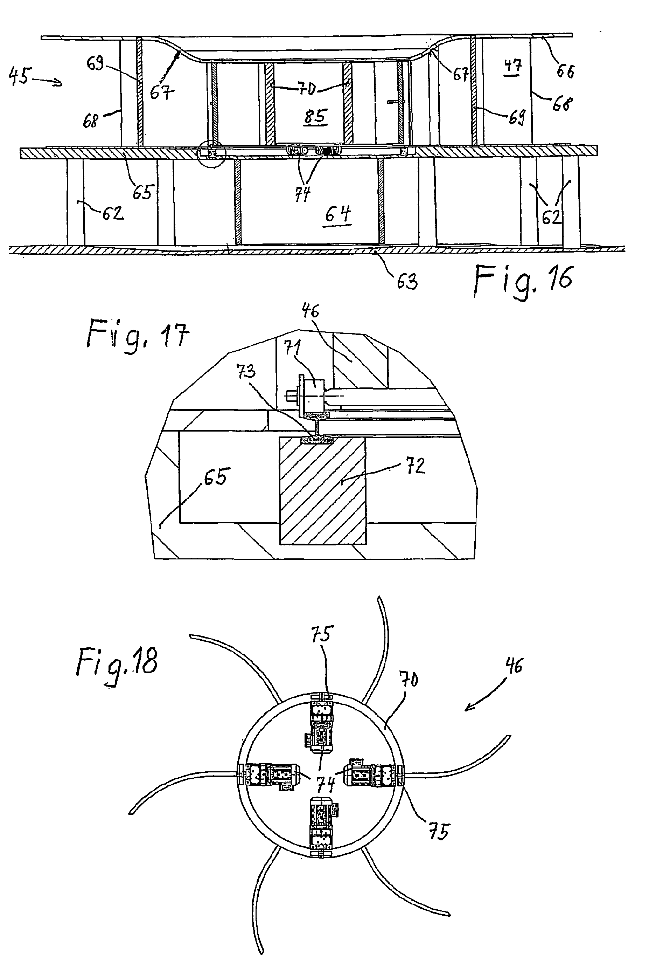

Fig. 16 zeigt die Aufstellung der, mit 61 bezeichneten, Gesamt-Anlage auf dem Boden:
Die unterste Anlage 45 ist durch Säulen 62 über den Boden 63 angehoben. In der Mitte befindet sich hier ein geschlossener Bau 64, über den die Gesamt-Anlage 61 von unten her zugänglich ist. Neben Treppen, Fahrstühlen o. dgl. nimmt der Bau 64 Büros, Werkstätten, Lager und die Steuerungen der Gesamt-Anlage auf. Treppen und/oder Fahrstühle können etwa auf der senkrechten Mittelachse der Gesamt-Anlage angeordnet sein.

Jede Anlage 45 hat eine Fundamentplatte 65, auf der die Fang- und Leitschaufeln 47 stehen, und eine von diesen getragene dünnere Deckenplatte 66. Die Deckenplatte 66 ist bei 67 zu dem Rotor 46 hin eingesenkt, um die Strömung zu beschleunigen. Die Linien 68 sind Außenkanten von Fang- und Leitschaufeln 47, die schmalen Schnittflächen 69 sind Schnitte durch Fang- und Leitschaufeln 47. Die beiden mit 70 bezeichneten Schnittflächen gehen durch die Wandung des den Zentralkörper des Rotors bildenden Hohlzylinders 85. Die weiteren sichtbaren Endkanten und Schnittflächen seien nicht im einzelnen betrachtet.

Der Rotor 46 ist, siehe die in Fig. 16 umkreiste und in Fig. 17 in größerem Maßstab dargestellte Einzelheit, mit Laufrollen 71 auf einer von einem Ringbalken 72 getragenen kreisförmigen Schiene 73 drehbar gelagert. Der Ringbalken 72 ist in die Fundamentplatte 65 eingelassen.

Vier unter dem erwähnten Hohlzylinder winkelsymmetrisch angeordnete Generatoren 74 sind, wie in Fig. 18 dargestellt, über Reib- oder Zahnräder 75 angetrieben, die an der Unterseite der Wandung des Hohlzylinders 80 anliegen. Die Anordnung 71 bis 73 ist in Fig. 18 nicht eingezeichnet.
Über der in Fig. 16 erscheinenden Deckenplatte 66 folgt die Fundamentplatte 65 der nächsten, wiederum alle beschriebenen Teile 65 bis 75 umfassenden Anlage 45 usw.

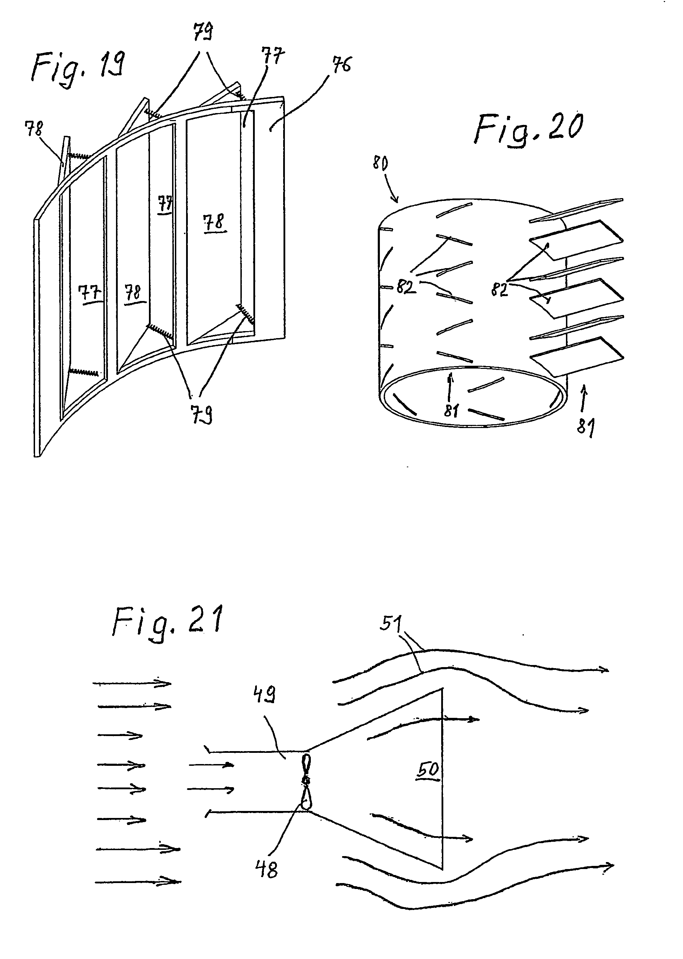

Fig. 19 und 20 zeigen jeweils eine Variante einer Weiterbildung der Erfindung, nämlich mit Durchlässen versehene Rotorschaufeln.

In der in Fig. 19 dargestellten Rotorschaufel 76, die z.B. als eine Schaufel des Rotors 46 zu denken ist, sind drei Fenster 77 eingeschnitten, die durch Klappen 78 ver schließbar sind. Die Klappen 78 sind durch Federn 79 derart gehalten, dass sie sich bei Verstärkung des Winddruckes weiter öffnen. Auch in der Schließstellung der Klappen 78 könnte noch ein Öffnungsspalt verbleiben, der von Anfang an einen Durchzug erlaubt.

In Fig. 20 ist ein Rotor 80 dargestellt mit Rotorflügeln 81, die jeweils durch eine Vielzahl einzelner Segmente 82 gebildet sind. Die Segmente 82 sind an dem Zentralkörper des Rotors 80 derart schwenkbar angebracht, dass sie sich abwechselnd nach der einen oder anderen Richtung verdrehen lassen aus einer Stellung, in der sie vollständig oder beinahe aneinander schließen, in Stellungen, in denen sie mehr oder weniger große Durchlässe freigeben.

In Fig. 21 ist zur Veranschaulichung der Sogwirkung ein Rotor 48 in einer Luftführung 49 angeordnet, die nicht dem Wind entgegen erweitert ist, sondern nach ihrem Ausgang 50 hin. Die Erweiterung am Ausgang 50 zwingt die vorbeiströmende Luft (Pfeile 51) in eine höhere Geschwindigkeit und verstärkt damit die, dem Prinzip der Strahlpumpe folgende, Sogwirkung.

Die eingangs nach a), b), c) und d) unterschiedenen Wirkprinzipien sind in den oben beschriebenen und dargestellten Anlagen und Vorrichtungen wie folgt benutzt:
Fig. 1: a) und b).
Fig. 5: a) und b), Ausgestaltungsmöglichkeiten nach c) und d).
Fig. 6: a) und b), Ausgestaltungsmöglichkeiten nach c) und d).
Fig. 7: a) und b), Ausgestaltungsmöglichkeiten nach c) und d).
Fig. 9: a) und b), Ausgestaltungsmöglichkeit nach c).
Fig. 10: b), c) und d).
Fig. 11: b), c) und d).
Fig. 12: c).
Fig. 13: a) und c).
Fig. 14,15: b) und c), möglicherweise geringfügig d).
Fig. 21: a).

Die Wirkprinzipien a) und b) wären in einfachster Form beispielsweise angewandt durch Aufstellung eines Rotors im Windschatten hinter einem Haus und eine neben dem Haus schräg aufgestellte Wand, die den Wind zu dem Rotor hin umlenkt und dabei zusammen mit einer gegenüberliegenden Hauswand zugleich eine Verdichtung herbeiführt.

Zusammengefasst lässt bzw. lassen sich mit der Erfindung im Vergleich zu bekannten Anlagen insbesondere
- die Energieausbeute je Volumeneinheit bzw. Nutzfläche der Anlage vergrößern,
- Energie in Bereichen gewinnen, in denen dies mit heutigen Anlagen nicht möglich ist, etwa wegen der Nähe zu Wohngebieten oder wegen der Topographie,
- die Gewinnung der Windenergie preisgünstiger gestalten,
- die Energieanlagen für größere Nennleistungen auslegen,
- die Windenergie auch bei niedrigeren und höheren Windgeschwindigkeiten gewinnen und/oder die Anlagen einfacherer und preiswerter sichern, wie gegen Stürme, Blitzschlag u.a.m.

## Patentansprüche

1. Vorrichtung zur Nutzung von Windenergie; die zur Lenkung des Windes Strömung wirksam auf einen die Strömungsenergie umsetzenden Rotor (46) mindestens eine den Wind derart lenkende Leitfläche aufweist, dass der Rotor, dessen Drehachse quer zur Strömungsrichtung angeordnet ist, mit der Strömung beaufschlagt ist,
**dadurch gekennzeichnet,**
**dass** der Rotor (46) entlang seiner Drehachse hohl ist und auf einer kreisförmigen Schiene (73) gelagert ist.

2. Vorrichtung nach Anspruch 1,
**gekennzeichnet durch** einen hohlen Turm (2) mit einer Windfangöffnung (5) am oberen Ende und einem im Hohlquerschnitt des Turmes (2) gebildeten Strömungskanal, der nach unten zu mindestens einem nahe der Erdoberfläche angeordneten Rotors (12;14) zum Umsetzen der Strömungsenergie führt, hinter dem ein Auslass (13) für die Luft angeordnet ist.

3. Vorrichtung nach Anspruch 2,
**dadurch gekennzeichnet,**
**dass** ein oberer Endabschnitt (3) des Turmes mit der Windfangöffnung (5) drehbar (4) ist.

4. Vorrichtung nach Anspruch 2 oder 3,
**dadurch gekennzeichnet,**
**dass** der Turm (2) teleskopisch längenverstellbar ist.

5. Vorrichtung nach einem der Ansprüche 1 bis 4,
**dadurch gekennzeichnet,**
**dass** sich ein Strömungskanal verzweigt (9) und Rotoren (12;14) zur Umsetzung in jedem Zweig (10) angeordnet sind, wobei vorzugsweise mindestens ein Teil der Zweige (10) verschließbar ist.

6. Vorrichtung nach einem der Ansprüche 1 bis 5,
**dadurch gekennzeichnet,**
**dass** sich ein Strömungskanal verzweigt und die Zweige (31) von verschiedenen Seiten auf einen Rotor (32) gerichtet sind oder dass eine Mehrzahl jeweils aus einer Windfangöffnung beaufschlagter Strömungskanäle (31) von verschiedenen Seiten auf einen Rotor (32) gerichtet ist.

7. Vorrichtung nach Anspruch 1 mit einem Rotor mit quer zur Windrichtung angeordneter Achse,
**dadurch gekennzeichnet,**
**dass** der Rotor (46) ringsum von Fang- und Leitschaufeln (47) umgeben ist, die jeweils schräg zur Radialrichtung, bezogen auf den Rotor (46), angestellt sind, derart, dass sie den auf sie treffenden Wind jeweils einseitig auf den Rotor (46) leiten und die andere Rotorseite abschirmen.

8. Vorrichtung,
**gekennzeichnet durch** mehrfache Anordnung (61) der Vorrichtung (45) nach Anspruch 7 eine über der anderen.

## Claims

1. Device for using wind energy that, in order to conduct the wind flow effectively onto a rotor (46) converting the flow energy, has at least one guide surface which conducts the wind in such a way that the rotor, whose axis of rotation is arranged transversely to the flow direction, is acted on by the flow,
**characterized in that**
the rotor (46) is hollow along its axis of rotation and is mounted on a circular rail (73).

2. Device according to Claim 1,
**characterized by** a hollow tower (2) with a wind-capturing opening (5) at the upper end and with a flow duct which is formed in the hollow cross section of the tower (2) and which leads downwardly to at least one rotor (12; 14) for converting the flow energy that is arranged close to the ground surface, behind which rotor an outlet (13) for the air is arranged.

3. Device according to Claim 2,
**characterized in that**
an upper end section (3) of the tower with the wind-capturing opening (5) is rotatable (4).

4. Device according to Claim 2 or 3,
**characterized in that**
the tower (2) is telescopically length-adjustable.

5. Device according to one of Claims 1 to 4,
**characterized in that**
a flow duct is branched (9) and rotors (12; 14) for conversion are arranged in each branch (10), with preferably at least part of the branches (10) being closable.

6. Device according to one of Claims 1 to 5,
**characterized in that**
a flow duct is branched and the branches (31) are directed towards a rotor (32) from different sides, or in that a plurality of flow ducts (31) each supplied from a wind-capturing opening are directed towards a rotor (32) from different sides.

7. Device according to Claim 1 having a rotor with an axis arranged transversely to the wind direction,
**characterized in that**
the rotor (46) is enclosed all the way around by capturing and guiding vanes (47) which are each set up obliquely to the radial direction with respect to the rotor (46) in such a way that they each guide the wind striking them onto the rotor (46) at the end side and shield the other rotor side.

8. Device,
**characterized by** a multiple arrangement (61) of the device (45) according to Claim 7 one above the other.

## Revendications

1. Dispositif d'utilisation d'énergie éolienne, qui, pour dévier un fleux de vent effectivement sur un rotor (46) destiné à convertir l'énergie du flux, présente au moins une surface de guidage déviant le vent de manière telle que le rotor, dont l'axe de rotation est disposé transversalement par rapport au sens du flux, est sollicité par le flux, **caractérisé en ce que** le rotor (46) est creux le long de son axe de rotation et est disposé sur un rail circulaire (73).

2. Dispositif selon la revendication 1, **caractérisé par** une tour creuse (2) présentant une ouverture (5) pour capter le vent en l'extrémité supérieure et un canal d'écoulement formé dans la section creuse de la tour (2), qui conduit vers le bas à au moins un rotor (12 ; 14) disposé à proximité de la surface du sol, destiné à convertir l'énergie d'écoulement, derrière lequel est disposée une sortie (13) pour l'air.

3. Dispositif selon la revendication 2, **caractérisé en ce qu'**une section d'extrémité supérieure (3) de la tour peut tourner (4) avec l'ouverture (5) pour capter le vent.

4. Dispositif selon la revendication 2 ou 3, **caractérisé en ce que** la longueur de la tour (2) peut être réglée de manière télescopique.

5. Dispositif selon l'une quelconque des revendications 1 à 4, **caractérisé en ce qu'**un canal d'écoulement se ramifie (9) et des rotors (12 ;14), destinés à la conversion, sont disposés dans chaque branche (10), au moins une partie des branches (10) pouvant de préférence être fermée.

6. Dispositif selon l'une quelconque des revendications 1 à 5, **caractérisé en ce qu'**un canal d'écoulement se ramifie et les branches (31) sont orientées, à partir de différents côtés, sur un rotor (32) ou **en ce qu'**une pluralité de canaux d'écoulement (31), pouvant être sollicités à chaque fois à partir d'une ouverture pour capter le vent, sont orientés à partir de différents côtés sur un rotor (32).

7. Dispositif selon la revendication 1, présentant un rotor pourvu d'axes disposés transversalement par rapport à la direction du vent, **caractérisé en ce que** le rotor (46) est entouré, sur le pourtour, d'aubes de captage et directrices (47) qui sont placées à chaque fois en biais par rapport à la direction radiale, par rapport au rotor (46), de manière telle qu'elles dirigent le vent qui les atteint à chaque fois d'un côté sur le rotor (46) et protègent l'autre côté du rotor.

8. Dispositif, **caractérisé par** une disposition multiple (61) de dispositifs (45) selon la revendication 7 les uns au-dessus des autres.
